(19) Europäisches Patentamt

European Patent Office

Office européen des brevets

(11) Publication number: **0 214 484**
**A1**

## (12) EUROPEAN PATENT APPLICATION

(21) Application number: 86111051.8

(22) Date of filing: 09.08.86

(51) Int. Cl.⁴: **H 02 H 3/38**
**H 02 H 7/26**

(30) Priority: 13.08.85 JP 179636/85

(43) Date of publication of application:
18.03.87 Bulletin 87/12

(84) Designated Contracting States:
CH DE GB LI SE

(71) Applicant: MITSUBISHI DENKI KABUSHIKI KAISHA
2-3, Marunouchi 2-chome Chiyoda-ku
Tokyo 100(JP)

(72) Inventor: Hattori, Toshiki MITSUBISHI DENKI K.K.
Power and Ind. Syst. Center 1-2, Wadasakicho 1-ch.
Hyogo-ku Kobe-shi Hyogo(JP)

(74) Representative: Eisenführ & Speiser
Martinistrasse 24
D-2800 Bremen 1(DE)

(54) Digital protective relay apparatus.

(57) A digital protective relay apparatus having a function to operate a suitable control circuit by first detecting an alternating quantity of a power line in the form of an analog signal per predetermined sampling time, then converting the analog signal into a digital signal and computing the detected quantity to sense any abnormal or dangerous state in the power line. Detection of such alternating quantity is performed by a sample and-hold circuit capable of sampling and holding the above quantity periodically at a sampling frequency which is an integral multiple of a reference frequency. The analog data representing such alternating quantity is converted into digital data by an analog to digital converter, and the differential of the voltage at the present time is computed on the basis of some past voltages anterior to the present time by a computing circuit of a central processing unit. The charge current is first computed by the compensating circuit from both such differential and the electrostatic capacity of the power line, and then is subtracted from the current at the present time so that the current value is not affected by the electrostatic capacity of the power line, hence ensuring a fast and accurate operation.

FIG. 3

# DIGITAL PROTECTIVE RELAY APPARATUS

## BACKGROUND OF THE INVENTION

### Field of the Invention

The present invention relates to a digital protective relay apparatus having a function to detect any abnormal or dangerous state in a power line by means of a digital circuit and to start the operation of a suitable control circuit.

### Description of the Prior Art

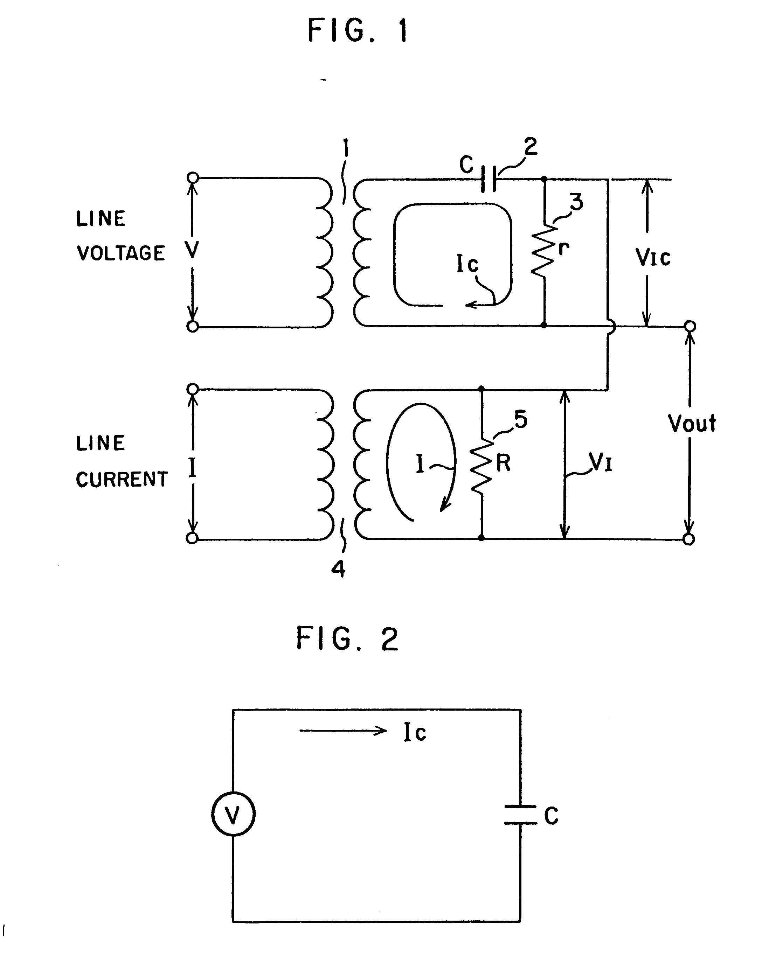

With regard to the conventional digital protective relay apparatus of this type designed for use in a power line, there is known "Microprocessor-based Digital Relays Application in TEPCO (IEEE Journal, 81 WM 119-7) proposed in Institute of Electrical and Electronics Engineers,1981 Winter Meeting. The countermeasure for charge current according to the above proposal resides in a circuit configuration comprising, as shown in Fig. 1, a coil 1 for isolating the voltage of a power line and converting it to a value easy to be inputted to a relay, a capacitor 2 disposed on the output side of the coil 1, a resistor 3 disposed on the same output side, a coil 4 for isolating the current of the power line and converting it to a value easy to be inputted to a protective relay, and a resistor 5 disposed on the output side of the coil 4.

In the above circuit, compensation for the charge current is performed in the following manner. As will be understood with facility from a simplified circuit of Fig. 2, the charge current Ic flowing in the capacitor 2 is defined by the Ohm's law as

$$Ic = \frac{V}{Zc} \qquad \dots\dots\dots (1)$$

where Zc is the impedance derived from the capacitance c of the capacitor 2. Therefore,

$$Zc = \frac{1}{j\omega c} \qquad \dots\dots\dots (2)$$

(where $\omega$ = $2\pi f$, and f is line frequency.)
In the above equation, j is an arithmetic symbol used in the AC circuit theory and represents a differential.

Substituting Eq. (2) for Eq. (3),

$$Ic = j\omega cv$$
$$= \frac{d}{dt}\, \omega cv$$
$$= \omega c\frac{dv}{dt} \qquad \dots\dots\dots (3)$$

Eq. (3) represents fundamentals of the operation which will be described below. Referring to Fig. 1 again, the charge current Ic caused by the line voltage V is

expressed as

$$Ic = \frac{V}{r + j\omega c}$$

A voltage $V_{Ic}$ is generated across the resistor 3.

$$V_{Ic} = Ic \times r = \frac{V}{r + j\omega c} \times r$$

Supposing now that r is a value sufficiently smaller than jwc, the above voltage may be written as

$$V_{Ic} \doteqdot \frac{V}{j\omega c} \times r \qquad \ldots\ldots\ldots (4)$$

Meanwhile, relative to the line current, a voltage $V_I$ given by the following equation is generated across the resistor 5.

$$V_I = I \cdot R \qquad \ldots\ldots\ldots (5)$$

When the resistors 3 and 5 are connected to each other as shown in Fig. 1, the following voltage Vout is produced from the output terminal.

$$V_{out} = IR - \frac{V}{j\omega c} \times r \qquad \ldots\ldots\ldots (6)$$

Eq. (6) indicates that $V_{out}$ corresponds to the value obtained by subtracting from IR, which represents the line current, the value determined by the line voltage V and the charge capacity c, i.e. the charge current. It is understood therefrom that a charge current compensation is made with respect to the line current.

In the conventional circuit of such configuration

- 3 -

designed as a countermeasure for the charge current in the power line, if the capacitor 2 corresponding to the charge capacity c of the transmission line is not provided, it becomes necessary to use an electrostatic capacity approximate to the value of such charge capacity c, hence raising a problem that an error is induced with respect to the value of the electrostatic capacity.

Furthermore, since the output resistor 3 is connected in series with the capacitor 2, a slight error of the electrostatic capacity is rendered great even when the selected value thereof is small.

In addition, any secular change or temperature fluctuation of the capacitor 2 immediately brings about an error of the electrostatic capacity.

## SUMMARY OF THE INVENTION

It is an object of the present invention to provide a digital protective relay apparatus which is capable of certainty making a compensation for the charge current in a power line without causing any error thereof. And another object of the invention resides in providing a digital protective relay apparatus adapted to prevent any error that may otherwise be induced in the electrostatic capacity due to deterioration of a capacitor resulting from its secular change or temperature - fluctuation.

In order to achieve the objects mentioned above, the digital protective relay apparatus according to the present invention is so contrived that the charge current is digitally computed in a central processing unit, which consists principally of a microprocessor, by using the data after analog-to-digital conversion of the line voltage and current, and the value obtained is subtracted from the line current previously converted into a digital form through analog-to-digital conversion, whereby a compensation is made for the charge current.

By virtue of the above constitution, it becomes possible to compute the charge current by the central processing unit in conformity with a specific arithmetic algorithm, hence reducing the time required for computation to eventually ensure an exact operation without causing any delay.

BRIEF DESCRIPTION OF THE DRAWINGS

Fig. 1 is a circuit diagram of a conventional charge current compensating circuit for a current differential carrier system;

Fig. 2 is a circuit diagram showing an equivalent circuit of Fig. 1;

Fig. 3 is a block diagram schematically showing the constitution of a digital protective relay apparatus embodying the present invention; and

Fig. 4 is a waveform chart of voltage and current for explaining the operation performed in the embodiment of Fig. 3.

## DESCRIPTION OF THE PREFERRED EMBODIMENTS

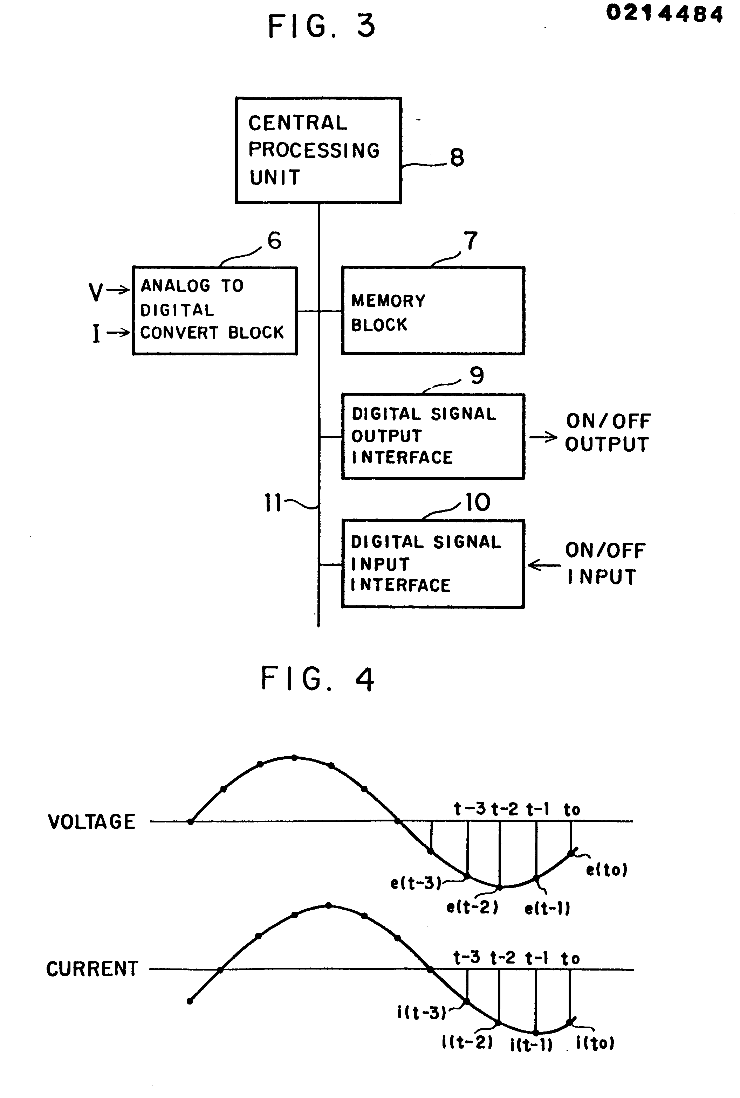

Hereinafter an exemplary embodiment of the present invention will be described with reference to the accompanying drawings. Fig. 3 is a functional block diagram of a digital protective relay apparatus, which comprises an A/D convert block 6 for converting an analog input of power-line voltage and current into a digital form; a memory block 7 for storing an operational program for protection and so forth; a central processing unit 8 for executing, by the use of voltage and current data read out from the A/D convert block 6, various computations in accordance with the program stored in the memory block 7; on/off signal interfaces 9 and 10 connected to external units; and a signal bus 11.

Fig. 4 graphically shows the voltage and current data converted into a digital form by the A/D convert block 6 described in connection with Fig. 3, wherein each of the voltage and the current is sine wave in waveform because of an alternating quantity. Since one period corresponds to an electrical angle of 360°, this graph shows an example of 30° sampling.

Supposing now that the voltage $e(t)$ is set as

$$e(t) = Em \sin \omega t \quad \text{(in which Em is maximum)}$$

then the voltage $e(t_0)$ at present time $t_0$ may be written as

$$e(t_0) = Em \sin \omega t_0 \quad \dots \dots (7)$$

Similarly, the voltage $e(t_{-1})$ at time $t_{-1}$ anterior thereto by 30° becomes as follows:

$$e(t_{-1}) = Em \sin \omega_{t-1}$$

Since $e(t_{-1})$ is anterior to $e(t_0)$ by an electrical angle of 30°, it may also be written as

$$e(t_{-1}) = t(t_0 - 30°) = Em \sin (\omega t_0 - 30°)$$

Developing the above,

$$e(t_{-1}) = Em \sin (\omega t_0 - 30°)$$
$$= Em (\sin \omega t_0 \cdot \cos 30° - \cos \omega t_0 \cdot \sin 30°)$$
$$= 0.866 \ Em \sin \omega t_0 - 0.5 \ Em \cos \omega t_0$$
$$= 0.866 \ e(t_0) - 0.5 \ Em \cos \omega t_0$$
$$\dots \dots (8)$$

The charge current is calculated by multiplying the differential of the voltage by a coefficient, as

Ic $= \omega c \frac{dv}{dt}$ in Eq. (3). Since the coefficient is determined previously in accordance with the desired amount of compensation, it is obvious that the charge current is obtained if the differential of the voltage is found.

Differentiating the voltage $e(t_0)$ of Eq. (7),

$$\frac{d}{dt} e(t_0) = \frac{d}{dt} Em \sin \omega t_0$$

$$= Em \cos \omega t_0 \qquad \ldots\ldots\ldots (9)$$

In Eq. (8), $Em \cos \omega t_0$ can be calculated as

$$Em \cos \omega t_0 = \frac{0.866 \, e(t_0) - e(t_{-1})}{0.5} \qquad \ldots\ldots (10)$$

Therefore the differential of the voltage is obtainable by substituting Eq. (10) for Eq. (9).

$$\frac{d}{dt} e(t_0) = \frac{0.866 \, e(t_0) - e(t_{-1})}{0.5} \qquad \ldots\ldots (11)$$

In Eq. (11), $e(t_{-1})$ on the right side is of a value anterior to the present time by an electrical angle of 30°, and the time lag is merely 1.67 ms at 50Hz or 1.38 ms at 60 Hz. Multiplying Eq. (11) by a coefficient $\omega c$ which corresponds to the charge capacity to be compensated for, then the charge current $ic(t_0)$ at time $t_0$ can be calculated as

$$ic(t_0) = \omega c \times \frac{0.866 \, e(t_0) - e(t_{-1})}{0.5} \qquad \ldots\ldots (12)$$

- 8 -

The current value without including the charge current
is obtained by subtracting $ic(t_0)$ of Eq. (12) from the
line current $i(t_0)$, so that proper computation for
protection can be executed by the use of such value.

In addition to the above example of using the
data anterior to the present time by an electrical angle
of 30°, it is also possible to use the 60° or 90°
anterior data as well, although the time lag is slightly
increased. In the case of using the 60° anterior data,

$$e(t_{-2}) = Em \sin (\omega t_0 - 60°)$$

$$= Em (\sin \omega t_0 \cdot \cos 60° - \cos \omega t_0 \cdot \sin 60°)$$

$$= 0.5 \; Em \sin \omega t_0 - 0.866 \; Em \cos \omega t_0$$

$$= 0.5 \; e(t_0) - 0.866 \; Em \cos \omega t_0$$

$$\frac{d}{dt} e(t_0) = Em \cos \omega t_0 = \frac{0.5 \; e(t_0) - e(t_{-2})}{0.866}$$

Meanwhile, in using the 90° anterior data, it is not
necessary to execute the computation as

$$\frac{d}{dt} e(t_0) = Em \cos \omega t_0$$

$$= -e(t_{-3})$$

And a desired result is achieved by merely changing the
code of the 90° anterior data, but there exists a disadvantage that the time lag is rendered longer.

As described hereinabove, according to the
present invention where the charge current is digitally computed on the basis of the anterior data that precedes by one sampling period, it becomes possible to attain satisfactory compensation for the charge current in a short time without causing any error or secular change.

WHAT IS CLAIMED IS:

1.      A digital protective relay apparatus for protecting the entirety of a power line inclusive of various units by digitally switching the current of said power line to a control circuit through a capacitor so selected as to be equivalent to the electrostatic capacity existing in said power line, said relay apparatus comprising:

a sample-and-hold circuit for sequentially sampling and holding the alternating quantity of said power line at a sampling frequency which is an integral multiple of the reference frequency of said power line;

a computing circuit for reading therein the alternating quantity data via said sample-and-hold circuit and computing the differential of the voltage on the basis of the voltage data at the present time and some more voltage data at past times anterior thereto;  and

a compensating circuit which first computes the charge current of said capacitor on the basis of both the differential obtained from said computing circuit and the electrostatic capacity existing in said power line, and then subtracts said charge current from the current at the present time, thereby compensating for the charge current.

2.     The digital protective relay apparatus as defined in claim 1, wherein said circuit for computing the differential of the voltage at the present time and said circuit for compensating for the current are incorporated in a central processing unit consisting of a microcomputer.

3.     The digital protective relay apparatus as defined in claim 2, wherein said microcomputer is equipped with an analog-to-digital converter for converting the line voltage and the line current from analog signals into digital signals, and required computations are executed by the computing circuit and the compensating circuit of said central processing unit on the basis of the digital signals obtained through such analong-to-digital conversion, thereby making a compensation for the current value.

4.     The digital protective relay apparatus as defined in claim 1, wherein said sample-and-hold circuit samples and holds the alternating quantity of said power line for a sampling time corresponding to an electrical angle of 30°.

5.     The digital protective relay apparatus as defined in claim 1, wherein said sample-and-hold circuit samples and holds the alternating quantity of said power line for a sampling time corresponding to an electrical angle of 60°.

6.     The digital protective relay apparatus as defined in claim 1, wherein said sample-and-hold circuit samples and holds the alternating quantity of said power line for a sampling time corresponding to an electrical angle of 90°.

0214484

# FIG. 1

LINE VOLTAGE V

LINE CURRENT I

C 2

r 3

Ic

V_IC

5

I R

V_I

Vout

4

# FIG. 2

Ic

V

C

# FIG. 3

```
        ┌──────────────────┐
        │ CENTRAL          │
        │ PROCESSING       │ ──── 8
        │ UNIT             │
        └──────────────────┘
                 │
      ┌─── 6     │      ┌─── 7
      │          │      │
 ┌──────────────┐│ ┌──────────────┐
V→│ ANALOG TO   ││ │ MEMORY       │
  │ DIGITAL     ││ │ BLOCK        │
I→│ CONVERT BLOCK││ │              │
 └──────────────┘│ └──────────────┘
                 │
                 │      ┌─── 9
                 │      │
                 │ ┌──────────────┐
                 │ │ DIGITAL SIGNAL│   ON/OFF
                 │ │ OUTPUT        │ → OUTPUT
                 │ │ INTERFACE     │
                 │ └──────────────┘
         11─     │      ┌─── 10
                 │      │
                 │ ┌──────────────┐
                 │ │ DIGITAL SIGNAL│   ON/OFF
                 │ │ INPUT         │ ← INPUT
                 │ │ INTERFACE     │
                 │ └──────────────┘
```

# FIG. 4

**European Patent Office**

# EUROPEAN SEARCH REPORT

0214484

EP 86 11 1051

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| Y | DE-B-2 032 578 (SIEMENS) * claims 1, 2, 4; figure * | 1,3 | H 02 H 3/38<br>H 02 H 7/26 |
| A | | 2 | |
| Y | US-A-3 984 737 (M. OKAMURA et al.) * claim 7; column 4, line 47 - column 5, line 7; figure 2 * | 1 | |
| Y | I.E.E. PROCEEDINGS, Section A-I, vol. 130, no. 3, part C, May 1983, pages 127-138, Old Working, Surrey, GB; A.T. JOHNS et al.: "New ultra-high-speed distance protection using finite-transform techniques" * page 130; figure 3 * | 1,3 | |
| A | US-A-3 048 744 (A.R. VAN CORTLANDT WARRINGTON) * figure 9 * | | **TECHNICAL FIELDS SEARCHED (Int. Cl 4)**<br><br>H 02 H 3/38<br>H 02 H 7/26 |
| D,A | IEEE TRANSACTIONS ON POWER APPARATUS AND SYSTEMS, vol. PAS-100, no. 5, May 1981, pages 2390-2398, US; Y. AKIMOTO et al.: "Microprocessor based digital relays application in TEPCO" * pages 2390-2398 * | | |

The present search report has been drawn up for all claims

| Place of search | Date of completion of the search | Examiner |
|---|---|---|
| BERLIN | 25-11-1986 | LEMMERICH J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82